Europäisches Patentamt

European Patent Office

Office européen des brevets

(11) Publication number:　**0 035 464**
**B1**

## (12) EUROPEAN PATENT SPECIFICATION

(45) Date of publication of patent specification: **05.06.85**

(21) Application number: **81630019.8**

(22) Date of filing: **19.02.81**

(51) Int. Cl.⁴: **F 02 M 25/02**

(54) **System for adding liquid to the combustion air of an internal combustion engine.**

(30) Priority: **21.02.80 AU 2472/80**

(43) Date of publication of application:
**09.09.81 Bulletin 81/36**

(45) Publication of the grant of the patent:
**05.06.85 Bulletin 85/23**

(84) Designated Contracting States:
**AT BE CH DE FR GB IT LI LU NL SE**

(56) References cited:
**EP-A-0 009 779**
**AU-B- 450 882**
**DE-A-2 114 571**
**DE-A-2 834 812**
**FR-A-1 100 560**
**US-A-2 537 495**
**US-A-2 632 637**

(73) Proprietor: **THOMAS MARK COSWAY & EDNA
DOREEN COSWAY**
**124, Caroline Street**
**South Yarra 3141 Victoria (AU)**

(72) Inventor: **Cosway, Thomas Mark**
**124, Caroline Street**
**South Yarra 3141 Victoria (AU)**

(74) Representative: **Weydert, Robert et al**
**Office Dennemeyer S.à.r.l. 21-25 Allée Scheffer**
**P.O. Box 41**
**L-2010 Luxembourg (LU)**

Courier Press, Leamington Spa, England.

# Description

This invention relates to a system for adding liquid to the combustion air of an internal combustion engine having a primary air intake system, a fuel supply means, and a valve for controlling the flow of at least said primary air into the engine, said system including a device provided in said primary air intake system upstream of said controlling valve for moistening said primary air with liquid, said moistening device including a housing with an air inlet opening, an outlet opening for the moistened primary air, and an air and liquid permeable element of open pore cellular material in said housing between the inlet opening and the outlet opening.

Such a system is known from AU—B—450 882 which concerns a device and method of introducing water, water based liquids or other liquids into the air intake of carburettors. While the known device was used with some success to improve combustion efficiency, resulting in reduced fuel consumption and lower levels of pollutants in the exhaust gases, it was often necessary to replace the main fuel jet of the carburettor by a smaller jet. This is undesirable since it complicates the fitting of the device to the engine. Also, it has been found that the known device has drawbacks as regards admixture of liquid to the air stream as the liquid and air cannot be so thoroughly mixed to enable the air to collect an adequate amount of liquid in fine particle or vapour form as is necessary for the desired improved combustion efficiency. A device of the same general construction is also described in US—A—2 537 495 which has essentially the same disadvantages as ˜ the above mentioned AU—B—450 882.

Both the system of the invention and the system of US—A—2 537 495 and AU—B—450 882 add liquid to the primary intake air by flowing the intake air through air and liquid permeable material to entrain liquid supplied to the permeable material.

In the prior art also systems are known for adding water downstream of the carburettor (US—A—2 632 637) or both downstream and upstream of the carburettor throttle valve (FR—A—1 100 560 and EP—A—0 009 779) without the intake air traversing an air and liquid permeable material to which water is supplied.

In such a system it is already known, see US—A—2 632 637 to arrange, in the line for adding water downstream of the carburettor, a valve which is closed when the engine is idling and is open when the engine is operating at a speed above idling speed.

The object of the invention is to avoid, in a system wherein the intake air flows through the permeable material to entrain liquid, the disadvantages referred to above and which nevertheless results in controlled introduction of liquid, such as water into the combustion process.

To solve this object the system of the invention is characterized by deflecting means in said moistening device constraining the air entering said inlet opening to flow generally transversely through a first part and then longitudinally through a second part of said air and liquid permeable element to said outlet opening, by a line drawing additional moistened air from said moistening device into said primary air stream at a position downstream of the primary air controlling valve, and by valve means for controlling the flow of said moistened air through said line in response to the level of vacuum produced by said engine in said line whereby said valve means is closed when the engine is idling and is open when the engine is operating at a speed above the idling speed.

With the system of this invention the fitting to the engine is simplified and it is no longer necessary to replace the main fuel jet of a carburettor by a smaller jet and additionally admixture of liquid to the intake air is improved and the liquid is collected and entrained in adequate amount in vapour or fine particle form because the intake air is forced to change flow direction in the air and liquid permeable material.

The line drawing additional moistened air from said moistening device into said primary air stream is preferably connected to the primary air intake system immediately downstream of the primary air controlling valve to ensure that the response time to the change in vacuum caused by opening of said valve from the idling position is minimal.

The element of open-pore cellular material preferably consists of interconnected strands of material free from covering membranes.

The air path between said moistening device and said engine preferably includes means for restricting the flow of air therethrough to reduce the level of vacuum produced by the engine. In one preferred form, the flow of air is restricted by a tube positioned in said air path to reduce the size of said air path.

One particularly preferred form of the invention will now be described with reference to the accompanying drawings in which;

Figure 1 is a schematic elevation of an internal combustion engine to which a system embodying the invention has been fitted;

Figure 2 is a section elevation of the carburettor and air cleaner of the engine of Figure 1;

Figure 3 is a sectional elevation of the liquid introducing means shown in Figure 1, and

Figure 4 is a sectional elevation of the control valve shown in Figure 1.

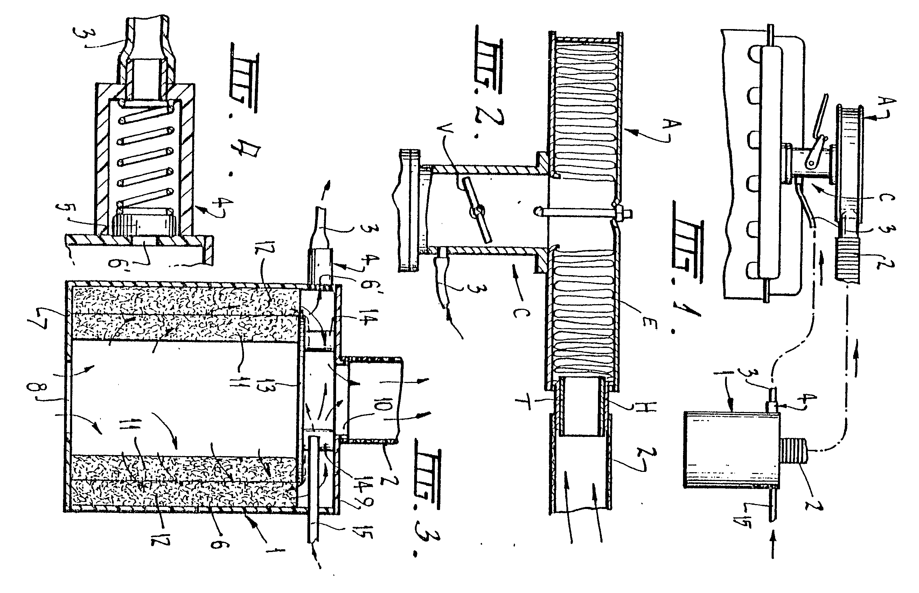

In general terms, the system shown in Figure 1 of the drawings comprises a moistening device 1 coupled to the carburettor C of the internal combustion engine by means of a flexible tube 2 connected to the air horn H of the air cleaner A which contains an air filter element E. An airflow restricting tube T is preferably positioned within the air horn H of the air cleaner A to restrict the air flow to the carburettor C to thereby reduce the level of vacuum produced by the engine. In the case of some engines, a restriction is not required.

An air bleed line 3 is connected to a fitting opening into the carburettor C below the butterfly valve V thereof and to the moistening device 1. The air bleed line 3 includes a valve 4 comprising a valve member 5 (Figure 4) which is spring loaded to normally close an opening 6' into the device 1 when the engine is idling. The valve member 5 is drawn away from the opening 6' by the vacuum in the line 3 at engine speeds above idling speed to draw moist air from device 1.

The moistening device 1 comprises a generally cylindrical housing 6 closed at one end by a bottom wall 7 having an air inlet opening 8 therein and closed at the other end by a top wall 9 having a flanged air outlet opening 10 over which the air passage tube 2 is connected. The housing 6 receives two annular air and liquid permeable elements 11 and 12 of open-pore cellular material. The use of two elements in the above manner effectively restricts the pore size of the combined elements due to overlap between the interconnecting strands of material defining the cellular structures in the two elements to ensure good admixture of air and liquid as discussed in greater detail below.

Both annular portions 11, 12 of cellular material have their one ends in contact with housing bottom wall 7 and their other ends spaced from the housing top wall 9. The inlet opening 8 communicates with the interior of inner element 11 and the outer surface of outer element 12 contacts the cylindrical inner surface of housing 6. The upper end of the innermost element 11 is sealed off by a circular plate 13 which is attached in spaced relation to the top wall 9 by spacer elements 14. The diameter of plate 13 is smaller than the internal housing diameter and corresponds approximately to the outer diameter of the inner element of cellular material. The sealing of the end of the innermost element 11 causes the air passing through the element 11 to travel generally transversally whereupon it travels longitudinally up the outer element 12.

Liquid is introduced to the housing 6 by means of an inlet pipe 15 disposed in the space between the plate 13 and the top wall 9 to deliver liquid onto the top of the plate 13 from which it permeates down the element 12 and into the element 11. Liquid is supplied to the inlet pipe 15 by means of a suitable pump (not shown), such as a modified windscreen washer pump which is controlled to deliver the required volume of liquid into the housing 6 to maintain the desired moisture level within the elements 11 and 12. It has been found that by pumping about 4 ml of water to the elements 11 and 12 approximately every 2 minutes, the required moisture level is maintained for a system suitable for a vehicle of the type discussed in further detail below.

As mentioned above, the air entering the housing 6 through the opening 8 travels substantially transversely through the element 11 since it cannot reach the air outlet 10 because of the plate 13. The air then travels longitudinally through the element 12 until it reaches the air outlet 10 passing through the space between the plate 13 and the end wall 9. By this arrangement, the air and liquid are thoroughly admixed and the liquid is entrained into the air stream in vapour or fine particle form.

The use of the system embodying the invention substantially improves the efficiency of the combustion within the engine, thereby decreasing fuel consumption and reducing the pollution content of the exhaust gases. The system embodying the invention was fitted to an engine using standard octane fuel and fuel consumption readings of approximately 11,67 km per liter at a cruise speed of 80 km per hour were obtained. Under all test conditions, the carbon monoxide content in the exhaust gases was under 1%. Without the system embodying the invention, fuel consumption at the same cruise speed was about 9,2 km per liter and carbon monoxide readings of between 4% to 6% were recorded.

It will be noted from these results that CO emissions are acceptably low for a vehicle having no fitted pollution controls. Similarly a significant increase in the fuel economy expected from a vehicle of this type was produced by the use of a system embodying the invention without any noticeable loss in power output.

It is believed that the system embodying the invention may be used with equal effect on an engine having a higher compression ratio and that the use of the system will enable the burning of low octane fuel and lead-free fuels without any significant loss in power. In the above tests, the engine performed well without pinging under load and it is believed that similar results should be obtainable in the case of a high compression ratio engine. Similarly, the system may be used with equal effect on engines having fuel injection systems although the size of the air inlet opening 8 may need to be enlarged. Where the engine has pollution controls fitted, it may be desirable to cool and condense the recycled exhaust gases so that excess liquid may be removed.

**Claims**

1. System for adding liquid to the combustion air of an internal combustion engine having a primary air intake system, a fuel supply means, and a valve for controlling the flow of at least said primary air into the engine, said system including a device (1) provided in said primary air intake system upstream of said controlling valve (V) for moistening said primary air with liquid, said moistening device including a housing (6) with an air inlet opening (8), an outlet opening (10) for the moistened primary air, and an air and liquid permeable element (11, 12) of open pore cellular material in said housing (6) between the inlet opening (8) and the outlet opening (10), characterized by deflecting means (6, 13) in said moistening device constraining the air entering said inlet opening (8) to flow generally transversely through a first part (11) and then longitudinally through a second part (12) of said air and liquid permeable element (11, 12) to said outlet opening (10), by a line (3) drawing additional moistened air from said moistening device (1) into said primary air stream at a position downstream of the primary air controlling valve (V), and by valve means (4) for controlling the flow of said moistened air through said line (3) in response to the level of vacuum produced by said engine in said line (3) whereby said valve means (4) is closed when the engine is idling and is open when the engine is operating at a speed above the idling speed.

2. System of claim 1, characterized in that said line (3) is connected to the primary air intake system immediately downstream of said air control valve (V).

3. System of claim 1 or 2, characterized in that the material of said air and liquid permeable element consists of interconnected strands of material free from covering membranes.

4. System of claim 1, characterized in that the said element comprises two annular portions (11, 12) of said open-pore cellular material one arranged within and in contact with the other, said deflecting means comprising a plate (13) for sealing one end of the innermost portion (11) of said element against longitudinal air flow whilst leaving the outermost portion of said element open to said outlet opening (10).

5. System according to claim 4, characterized in that both annular portions (11, 12) of open-pore cellular material have their one ends in contact with an end wall (7) of the housing provided with the air inlet opening (8), said air inlet opening communicating with the interior of the inner annular portion (11), the other ends of said annular portions (11, 12) being spaced from the other end wall (9) of the housing which is provided with the outlet opening (10) for moistened air, said plate (13) being attached in spaced relation to said other end wall (9) and having a diameter smaller than the internal housing diameter and corresponding approximately to the outer diameter of the inner portion (11) of cellular material, the outer circumferential surface of the outer portion (12) of cellular material being in contact with the housing peripheral wall, and in that a liquid supply pipe (15) is disposed to supply liquid to the top of the plate (13).

6. System of any one of the preceding claims, characterized by means for restricting the flow of air from said moistening device (1) to said primary air path to reduce the level of vacuum produced by the engine.

7. System of claim 6, characterized in that said restricting means comprises a tube (T) positioned in the primary airpath to reduce the size of said airpath.

8. System of claim 6 for an internal combustion engine intake system having an air cleaner (A), characterized in that the moistening device (1) is connected to the air cleaner inlet and the flow restricting means is arranged in said air cleaner inlet.

## Revendications

1. Système en vue d'introduire un liquide dans l'air de combustion d'un moteur à combustion interne comportant un système d'admission d'air primaire, un moyen d'alimentation en carburant, ainsi qu'une soupape destinée à contrôler le débit d'au moins cet air primaire dans le moteur, ce système comprenant un dispositif (1) prévu dans le système d'admission d'air primaire en amont de la soupape de contrôle (V) en vue d'humidifier cet air primaire avec le liquide, ce dispositif d'humidification comprenant un logement (6) comportant une ouverture d'entrée d'air (8), une ouverture de sortie (10) pour l'air primaire humidifié, ainsi qu'un élément perméable à l'air et au liquide (11, 12) en une matière cellulaire à pores ouverts disposé dans le logement (6) entre l'ouverture d'entrée (8) et l'ouverture de sortie (10), caractérisé par un moyen déflecteur (6, 13) monté dans le dispositif d'humidification et qui contraint l'air pénétrant dans l'ouverture d'entrée (8) à s'écouler généralement transversalement à travers une première partie (11), puis longitudinalement à travers une seconde partie (12) de l'élément perméable à l'air et au liquide (11, 12) en direction de l'ouverture de sortie (10), par une canalisation (3) aspirant une quantité supplémentaire d'air humidifié du dispositif d'humidification (1) dans le courant d'air primaire en un point situé en aval de la soupape de contrôle d'air primaire (V), ainsi que par une soupape (4) destinée à contrôler le débit d'air humidifié à travers la canalisation (3) en réponse au niveau de dépression créé par le moteur dans cette canalisation (3), de telle sorte que la soupape (4) soit fermée lorsque le moteur tourne au ralenti et qu'elle soit ouverte lorsque le moteur fonctionne à un régime supérieur à celui du ralenti.

2. Système selon la revendication 1, caractérisé en ce que la canalisation (3) est reliée au système d'admission d'air primaire immédiatement en aval de la soupape de contrôle d'air (V).

3. Système selon la revendication 1 ou 2, caractérisé en ce que la matière de l'élément perméable à l'air et au liquide est constituée de torons de matière exempte de membranes de recouvrement qui sont reliés entre eux.

4. Système selon la revendication 1, caractérisé en ce que l'élément précité comprend deux parties annulaires (11, 12) de la matière cellulaire précitée à pores ouverts disposées l'une dans l'autre et en contact mutuel, tandis que le moyen déflecteur comprend une plaque (13) destinée à étancher une extrémité de la partie intérieure extrême (11) de l'élément vis-à-vis de l'écoulement d'air longitudinal, tout en laissant la partie extérieure extrême de cet élément ouverte vers l'ouverture de sortie (10).

5. Système selon la revendication 4, caractérisé en ce qu'une extrémité des deux parties annulaires (11, 12) de matière cellulaire à pores ouverts entre en contact avec une paroi en bout (7) du logement qui comporte l'ouverture d'entrée d'air (8), laquelle communique avec l'intérieur de la partie annulaire intérieure (11), tandis que l'autre extrémité de ces parties annulaires (11, 12) est espacée de l'autre paroi en bout (9) du logement qui est pourvue de l'ouverture de sortie (10) pour l'air humidifié, la plaque (13) étant fixée dans un relation d'espacement à cette autre paroi en bout (9) et ayant un diamètre inférieur au diamètre intérieur du logement et correspondant approximativement au diamètre extérieur de la partie intérieure (11) de matière cellulaire, la surface extérieur circonférentielle de la partie extérieure (12) de matière cellulaire entrant en contact avec la paroi périphérique du logement, tandis qu'une conduite d'alimentation en liquide (15) est disposée pour acheminer le liquide au sommet du la plaque (13).

6. Système selon l'une quelconque des revendications précédentes, caractérisé par un moyen destiné à limiter l'écoulement d'air du dispositif d'humidification (1) vers le parcours d'air primaire afin de réduire le niveau de dépression créé par le moteur.

7. Système selon la revendication 6, caractérisé en ce que le moyen limiteur d'écoulement precité comprend un tube (T) disposé dans le parcours d'air primaire en vue de réduire la dimension de ce parcours.

8. Système selon la revendication 6 pour un système d'admission de moteur à combustion interne comportant un filtre à air (A), caractérisé en ce que le dispositif d'humidification (1) est relié à l'entrée de ce filtre à air, tandis que le moyen limiteur d'écoulement est disposé dans cette entrée du filtre à air.

## Patentansprüche

1. Vorrichtung zur Zugabe von Flüssigkeit zur Verbrennungsluft einer Brennkraftmaschine, die ein Primärluftansaugsystem, eine Kraftstoffzuführeinrichtung und ein Absperrorgan zum Steuern der Strömung wenigstens der Primärluft in die Maschine hat, mit einer in dem Primärluftansaugsystem stromaufwärts des steuernden Absperrorgans (V) vorgesehenen Einrichtung (1) zum Befeuchten der Primärluft mit Flüssigkeit, wobei die Befeuchtungseinrichtung ein Gehäuse (6) mit einer Lufteinlaßöffnung (8), einer Auslaßöffnung (10) für die befeuchtete Primärluft und einem luft- und flüssigkeitsdurchlässigen Element (11, 12) aus offenporigem Zellmaterial in dem Gehäuse (6) zwischen der Einlaßöffnung (8) und der Auslaßöffnung (10) hat, gekennzeichnet durch Ablenkeinrichtungen (6, 13) in der Befeuchtungseinrichtung, die die in die Einlaßöffnung (8) eintretende Luft zwingen, insgesamt quer durch einen ersten Teil (11) und dann in Längsrichtung durch einen zweiten Teil (12) des luft- und flüssigkeitsdurchlässigen Elements (11, 12) zu der Auslaßöffnung (10) zu strömen, durch eine Leitung (3), die zusätzliche befeuchtete Luft aus der Befeuchtungseinrichtung (1) an einer Stelle stromabwärts des die Primärluft steuernden Absperrorgans (V) in den Primärluftstrom saugt, und durch eine Ventileinrichtung (4) zum Steuern der Strömung der befeuchteten Luft durch die Leitung (3) entsprechend der Größe des Unterdruckes, der durch die Maschine in der Leitung (3) erzeugt wird, wodurch die Ventileinrichtung (4) geschlossen ist, wenn die Maschine im Leerlauf ist, und offen ist, wenn die Maschine mit einer Drehzahl oberhalb der Leerlaufdrehzahl läuft.

2. Vorrichtung nach Anspruch 1, dadurch gekennzeichnet, daß die Leitung (3) mit dem Primärluftansaugsystem unmittelbar stromabwärts des Luftsteuerabsperrorgans (V) verbunden ist.

3. Vorrichtung nach Anspruch 1 oder 2, dadurch gekennzeichnet, daß das Material des luft- und flüssigkeitsdurchlässigen Elements aus miteinander verbundenen Materialsträngen besteht, die frei von abdeckenden Membranen sind.

4. Vorrichtung nach Anspruch 1, dadurch gekennzeichnet, daß das Element zwei ringförmige Teile (11, 12) aus dem offenporigen Zellmaterial aufweist, von denen der eine innerhalb und in Kontakt mit dem anderen angeordnet ist, wobei die Ablenkeinrichtungen eine Platte (13) aufweisen, die ein Ende des innersten Teils (11) des Elements gegen eine Längsluftströmung abdichtet, dagegen den äußersten Teil des Elements zur Auslaßöffnung (10) hin offenläßt.

5. Vorrichtung nach Anspruch 4, dadurch gekennzeichnet, daß die beiden ringförmigen Teile (11, 12) aus offenporigem Zellmaterial an ihren einen Enden mit einer Endwand (7) des Gehäuses in Berührung sind, die mit der Lufteinlaßöffnung (8) versehen ist, welche mit dem Inneren des inneren ringsförmigen Teils (11) in Verbindung steht, wogegen die anderen Enden der ringförmigen Teile (11, 12) Abstand von der anderen Endwand (9) des Gehäuses haben, die mit der Auslaßöffnung (10) für befeuchtete Luft versehen ist, wobei die Platte (13) mit Abstand von der anderen Endwand (9) befestigt ist und einen Durchmesser hat, der kleiner als der innere Gehäusedurchmesser ist und ungefähr dem Außendurchmesser des inneren Teils (11) aus Zellmaterial entspricht und wobei die äußere Umfangsfläche des äußeren Teils (12) aus Zellmaterial mit der Gehäuseumfangswand in Berührung ist, und daß ein Flüssigkeitszuführrohr (15) vorgesehen ist, um der Oberseite der Platte (13) Flüssigkeit zuzuführen.

6. Vorrichtung nach einem der vorhergehenden Ansprüche, gekennzeichnet durch eine Einrichtung zum Drosseln der Luftströmung von der Befeuchtungseinrichtung (1) zu dem Primärluftweg, um die Größe des durch die Maschine erzeugten Unterdrucks zu reduzieren.

7. Vorrichtung nach Anspruch 6, dadurch gekennzeichnet, daß die Drosseleinrichtung ein Rohr (T) aufweist, das in dem Primärluftweg angeordnet ist, um die Größe des Luftweges zu reduzieren.

8. Vorrichtung nach Anspruch 6 für das Ansaugsystem einer Brennkraftmaschine, das einen Luftfilter (A) hat, dadurch gekennzeichnet, daß die Befeuchtungseinrichtung (1) mit dem Luftfiltereinlaß verbunden isg und daß die Strömungs-

drosseleinrichtung in dem Luftfiltereinlaß ange-ordnet ist.

# 0 035 464

FIG. 1.

FIG. 2.

FIG. 3.

FIG. 4.